# EUROPEAN PATENT SPECIFICATION

(11) **EP 1 972 202 B1**
(45) Date of publication and mention of the grant of the patent: **17.06.2009**
(21) Application number: 08151475.4
(22) Date of filing: 15.02.2008
(51) Int. Cl.: A23L 1/22, A23L 1/05, A61K 9/48, A61K 9/50, A23G 3/00, A23G 4/00

(54) **Composite edible product comprising glyceride oil**
Zusammengesetztes essbares Produkt mit Glyceridöl
Produit comestible composite comportant de l'huile de glycéride

(30) Priority: 13.03.2007 EP 07103975
(43) Date of publication of application: 24.09.2008
(73) Proprietor: Unilever N.V., 3013 AL Rotterdam (NL); Unilever PLC, London EC4Y 0DY (GB)
(72) Inventor: Condea Brinca, Rolanda Unilever R&D Vlaardingen B.V., 3133 AT, Vlaardingen (NL); Coolbergen-Van Zon, Mieke, 32555 LK Oude Tonge (NL); Dekker, Rob Unilever R&D Vlaardingen B.V., 3133 AT, Vlaardingen (NL)
(74) Representative: Wurfbain, Gilles L.

(56) References cited:
- EP-A- 1 285 588
- US-A1- 2006 088 645
- US-A1- 2006 110 442

## Description

### TECHNICAL FIELD OF THE INVENTION

The present invention relates to a composite edible product comprising a liquid or liquefiable filling and a biopolymer matrix, wherein the filling contains at least 50 wt.% of glyceride oil.

### BACKGROUND OF THE INVENTION

US 4,601,907 describes a chewy confection with a chewing gum outer casing and a centre filling, said filling comprising an aerated plastic blend of 55-90 wt.% of a water-soluble, sweet-tasting chewy candy matrix having dispersed therein (1) 5-20 wt.% of fat with a melting point above 22°C and (2) 0.1-10 wt.% of a whipping agent, said plastic blend having a moisture content of 5-20 wt.%. The aeration of the centre filling together with its fat content is said to assist in rendering the consistency of the centre filling similar to that of the chewing gum outer casing.

US 2006/0088645 describes a food product comprising:
- at least one omega-3 fatty acid component substantially microencapsulated in a microencapsulating gelatine;
- at least one of corn syrup, glucose syrup and sucrose;
- a citric acid present in an amount of about 0.8% to about 4% by weight of the food product;
- confectionary gelatine matrix; and
- a lemon flavouring agent present in about 0.02% to about 2% by weight of the food product,
wherein the microencapsulated omega-3 fatty acid component, citric acid and lemon flavouring agent are suspended in the confectionary gelatine matrix. The products described in this US application include fish oil, but are said to lack a fish aroma and/or flavour.

The present invention provides a composite edible product that can deliver high levels of glyceride oil without imparting a fatty mouthfeel. A fatty mouthfeel is often not appreciated by consumers. Furthermore, consumers associate a fatty mouthfeel with high caloric content. Hence, a fatty mouthfeel is particularly undesirable for products that are marketed as anti-obese, healthy, beautifying etc. However, if products are to contain a substantial fraction of glyceride oil, it is usually difficult to provide a product format that does not give rise to a fatty mouthfeel sensation upon consumption.

### SUMMARY OF THE INVENTION

The inventors have designed a composite edible product that may contain high levels of glyceride oil without imparting a fatty mouthfeel and that furthermore produces a very special sensation during chewing. The composite edible product of the present invention comprises a plurality of filled capsules containing the glyceride oil, which capsules have been embedded in a biopolymer matrix. The filled capsules are relatively small and comprise a thin shell that typically holds 0.4-50 µl of a liquid or liquefiable core. The composition of the shell of the filled capsules is different from that of the biopolymer matrix.

The composite edible product of the present invention may take the form of, for example, a candy (e.g. wine gums), a bar, a tablet etc. The glyceride oil comprised in the filled capsules may suitably contain fat soluble or fat dispersible nutrients, such as lycopene, vitamin E and β-carotene. Likewise, shells of the filled capsules and the biopolymer matrix may advantageously contain non-lipophilic nutrients such as hydrophilic vitamins and minerals.

The inventors have surprisingly found that although during chewing at least a part of the filled capsules is destroyed and consequently releases their glyceride oil content, no fatty mouthfeel is perceived. As a matter of fact it was observed that the in-mouth destruction of the filled capsules and the simultaneous release of the glyceride oil from these capsules produces a very pleasant juicy mouthfeel, especially in case of relatively large filled capsules The present product is believed to derive special chewing characteristics from the fact that the rheological characteristics of the shells of the filled capsules are different from those of the biopolymer matrix. The use of a rigid shell material in combination with an elastic biopolymer matrix, for instance, yields a product that will produce a special "crunchy" sensation during chewing.

The inventors have also discovered that the glyceride oil contained in the present composite product is effectively protected from oxidation, even if the product is stored in contact with air. Thus, the present product may suitably contain a glyceride oil that is rich in polyunsaturated fatty acids without this giving rise to the rapid formation of oxidative off-flavours.

### DETAILED DESCRIPTION OF THE INVENTION

Accordingly, the present invention relates to a composite edible product comprising a plurality of discrete filled capsules embedded in a biopolymer matrix, wherein:
- the filled capsules comprise a shell holding 0.4-50 µl of a liquid or liquefiable core,
- the shell contains at least 5 wt.% of gelling biopolymer and has a thickness in the range of 10-200 µm;
- the liquid or liquefiable core contains at least 50 wt.% of glyceride oil; and
- the composition of the biopolymer matrix is different from the composition of the shell of the filled capsules.

The term "glyceride oil" as used herein refers to substances containing a glycerol residue as well as one or more fatty acid residues. Examples of suitable glyceride oil substances include triglycerides, diglycerides, monoglycerides and phospholipids. The terms "oil" and "fat", unless indicated otherwise, are synonyms. The glyceride oil according to the present invention may be liquid, solid or semi-solid at ambient temperature.

The term "liquid core" as used herein means that the core of the filled capsules is liquid at a temperature of 20°C.

The term "liquefiable core" as used herein means that the core of the filled capsule is not liquid at 20°C, but that it will become liquid if it is heated or subjected to conditions of shear. According to a preferred embodiment, the liquefiable core has a melting point below 40°C. Even more preferably the liquefiable core has a melting point below 35°C and most preferably the melting point is below 30°C. If a liquefiable core with a melting point below mouth temperature (about 35°C) is employed, the core will melt in the mouth and the desirable in-mouth properties associated with the release of the liquid filling can be realised.

According to a particularly preferred embodiment, the shell of the filled capsules holds a liquid core. It is particularly unexpected that the present composite product does not impart a strong fatty mouthfeel even if the filled capsules contain a liquid glyceride oil based core that is quickly released during chewing. Furthermore, it was found that the in-mouth sensation experienced during chewing is actually very pleasant if the core of the filled capsule is liquid. For these reasons it is also preferred to employ a glyceride oil that is liquid at ambient temperature.

The amount of glyceride oil contained in the liquid or liquefiable core of the filled capsules advantageously exceeds 60 wt.%, most preferably it exceeds 70 wt.%. The core of the filled capsules preferably contains less than 40 wt.%, more preferably less than 20 wt.% and most preferably less than 2 wt.% of water.

The benefits of the present invention are particularly pronounced in composite edible products that contain a relatively large fraction of liquid or liquefiable core material. Accordingly, in a preferred embodiment of the invention the liquid or liquefiable core represents at least 25 vol.%, more preferably 30-95 vol.% of the composite edible product.

The present invention encompasses edible products in which the biopolymer matrix and the shell of the filled capsules comprise different biopolymers. Thus, for instance, gelatine may be the main biopolymer within the biopolymer matrix and alginate may be the main biopolymer in the shell of the filled capsules. The present invention also encompasses composite edible products in which the biopolymer matrix and the shell of the filled capsules contain the same biopolymer(s), provided the chemical composition of the shell and the biopolymer matrix is different, e.g. because the biopolymer in the shell is cross-linked and the biopolymer in the biopolymer matrix is not or because the biopolymer matrix contains substantial levels of sugars and the shell does not.

The sensory characteristics of the composite edible product are also affected by the thickness of the shell of the filled capsules in relation to the internal volume of the filled capsules. Preferably, the shell is relatively thin and the liquid or liquefiable core represents at least 30 vol.%, preferably 40-95 vol.% of the filled capsules. Typically, the average thickness of the shell of the filled capsules is in the range of 10-100 µm, preferably in the range of 30-60 µm.

Another feature of the present composite product that affects the sensory properties of the product is the compressibility of the product. Preferably, the product exhibits significant compressibility as demonstrated by a Stevens value of less than 200 g, preferably of less than 150 g. Usually, the Stevens value of the present product exceeds 10 g. The aforementioned Stevens values are determined with a Stevens Texture Analyzer using a probe circle size = 3, a penetration rate of 2 mm/sec. and a penetration depth of 0.5 cm.

It was found that the present composite product exhibits particularly interesting, in-mouth properties, such as crunchiness, if the filled capsules contain a rigid shell. Thus, according to a preferred embodiment, the shell of the filled capsules has a rigid consistency and wherein upon chewing the filled capsules produce a crunchy sensation. According to a particularly preferred embodiment, the present product combines the latter feature of crunchy filled capsules with significant compressibility as defined herein before. Composite products exhibiting this particular combination of features were found to produce a very desirable in-mouth sensation during chewing.

The appearance of the present composite product is particularly attractive if the filled capsules within the product are visible to the naked eye, even if they are submerged in the biopolymer matrix. On the other hand it is also preferred that the biopolymer matrix is not transparent as this causes the individual filled capsules to become indistinguishable. Thus, according to a preferred embodiment, the biopolymer matrix is opaque, but not transparent. According to a particularly preferred embodiment, the filled capsules are coloured and the colour of the filled capsules is different from the colour of the biopolymer matrix. A clear colour contrast between the filled capsules and the surrounding biopolymer matrix can yield a composite product that exhibits a very attractive colour pattern.

The shell of the filled capsules comprises one or more gelling biopolymers. Gelling biopolymers are used as these biopolymers enable the preparation of a shell that is capable of holding the liquid or liquefiable core due to the presence of an intricate biopolymer network.

In order to enhance the cohesion of the biopolymer network it may be advantageous to cross-link the gelling biopolymer. Here the term "cross-linking" refers to the treatment of a gel with an agent that creates or facilitates the creation of extra bonds between the biopolymer molecules within the gel network. Gelatine, for instance, may suitably be cross-linked with the help of gluteraldehyde, trans-glutaminase or tannin. According to a preferred embodiment, the shell of the filled capsules contains at least 50 wt.%, preferably at least 70 wt.% of one or more optionally cross-linked gelling biopolymers selected from the group consisting of gelatine, alginate, starch, modified starch, pectin, carrageenan, agar, xanthan gum, locust bean gum and combinations thereof. Most preferably the shell of the filled capsules contains at least 50 wt.%, preferably at least 70 wt.% of a gelling biopolymer selected from the group consisting of alginate, gelatine (optionally cross-linked) or a combinations thereof.

The same gelling biopolymers that can be used in the shell of the filled capsules may also suitably be used in the biopolymer matrix of the present composite product. Thus, the biopolymer matrix advantageously contains at least 0.5%, preferably at least 1% of one or more gelling biopolymers selected from the group consisting of gelatine, alginate, starch, modified starch, pectin, carrageenan, agar, xanthan gum, locust bean gum and combinations thereof. According to a particularly preferred embodiment, the biopolymer matrix contains at least 30 wt.%, more preferably at least 50 wt.% of polyols. As used herein, the term "polyol" encompasses sugars (mono-, di- and trisaccharides), glycerol and sugar alcohols. According to a particularly preferred embodiment, the biopolymer matrix contains at least 30 wt.%, more preferably at least 50 wt.% of one or more sugar alcohols selected from the group consisting of sorbitol, maltitol, maltol, isomalt, erythritol, xylitol, mannitol, and lactitol.Naturally, also the gelling biopolymers of the biopolymer matrix may also be cross-linked. It is preferred, however, to employ gelling biopolymers in the biopolymer matrix that have not been cross-linked.

As mentioned herein before, the benefits of the present composite edible product are especially appreciated in product entities of relatively small size. According to an advantageous embodiment, the composite product is a nutritional serving unit having a weight in the range of 2-20 g. Here the term "serving unit" refers to a clearly distinguishable product entity that can easily be separated from similar (co-packed) product entities without the use of any tools (e.g. spoons). In accordance with the present invention, the serving unit can take many different forms, including candy-like shapes or bars containing several serving units in the form of easily removable chunks.

With a view to product stability and mouthfeel, it is preferred that the water content of the biopolymer matrix and the shell of the filled capsules is relatively low. Accordingly, the water content of the biopolymer matrix is preferably less than 30 wt.%, more preferably less than 25 wt.% and most preferably less than 20 wt.%. The water content of the shell of the filled capsules is preferably less than 20 wt.%, more preferably less than 15 wt.% and most preferably less than 12 wt.%.

The composite products of the present invention can advantageously be used to deliver oil-soluble or oil dispersible ingredients. As explained herein before, the present product format ensures that these ingredients do not produce an objectionable fatty mouthfeel. Furthermore, it was found that oil-soluble or oil-dispersible ingredients are effectively protected against e.g. oxidation by incorporating them in the core of the filled capsules. An example of an ingredient that can advantageously be incorporated in the core of the filled capsules is ω-3 polyunsaturated fatty acid (ω-3 PUFA). A wide range of health benefits have been attributed to ω-3 PUFA, which is why this ingredient is increasingly used in nutritional formulations. However, ω-3 PUFA oxidises very rapidly, resulting in the formation of a very unpleasant off-flavour. Furthermore, in order to deliver significant levels of ω-3 PUFA, substantial quantities of sources of ω-3 PUFA, such as fish oil, must be consumed. This poses a special problem if the product vehicle used to deliver ω-3 PUFA is relatively small in size. As will be clear from what has been said herein before, the present composite product offers the advantage that it enables the delivery of significant quantities of ω-3 PUFA in a concentrated fashion without imparting an objectionable fatty mouthfeel. Furthermore, the ω-3 PUFA is effectively protected against oxidation by incorporating it in the core of the filled capsules. Accordingly, a particularly preferred embodiment of the invention relates to a composite edible product wherein the liquid or liquefiable core contains at least 3 wt.%, more preferably at least 10 wt.% of ω-3 PUFA.

According to another preferred embodiment, the liquid or liquefiable core of the filled capsules comprised within the present composite product contains at least 100 mg, preferably at least 500 mg of ω-3 PUFA. The incorporation of ω-3 PUFA in such amounts makes it possible to deliver the desired daily intake of ω-3 PUFA through the consumption of only a limited number of the composite product entities.

According to a particularly preferred embodiment the ω-3 PUFA employed in accordance with the present invention is selected from the group consisting of docosahexaenoic acid, eicosapentaenoic acid and combinations thereof.

Besides or instead of ω-3 PUFA the liquid or liquefiable core of the filled capsules may advantageously contain other oil-soluble or oil-dispersible nutritionally active ingredients. Thus, in accordance with one particular preferred embodiment, the filled capsule contains at least 1 mg, preferably at least 2 mg of lycopene. According to another preferred embodiment, the liquid or liquefiable core contains at least 5 mg, preferably at least 10 mg of vitamin E.

Nutritionally active ingredient may also suitably be incorporated in the present composition product by entrapping them in the shell of the filled capsules or in the biopolymer matrix According to a preferred embodiment, the shell of the filled capsules and the biopolymer matrix together contain at least 300 mg of one or more nutritional components selected from the group consisting of minerals, vitamins and flavonoids. In a particularly preferred composite product the shell of the filled capsules and the biopolymer matrix together contain at least 30, preferably at least 100 mg of vitamin C. In another equally preferred composite product the biopolymer matrix contains at least 10 mg of isoflavones.

The invention is further illustrated by means of the following examples.

### EXAMPLES

### Example 1

Alginate microcapsules having a diameter of 1.5 mm and containing a mixture of fish oil, lycopene, vitamin E and flavour were prepared using the methodology described in US 2004/0191366. The composition of the liquid core of the capsules was as follows:

| | Wt.% |
|---|---|
| Enriched fish oil (Unimeg 38 ex Ocean Nutrition Canada) | 96.47 |
| Lycopene (Lyc-O-Mato, 15% dispersion in oil ex LycoRed) | 1.19 |
| Vitamin E acetate (Covitol 1250 ex Cognis) | 2.14 |
| Flavour | 0.20 |

The alginate microcapsules so obtained were used to prepare a composite edible product according to the present invention. The composition of the composite edible product was as follows:

| | Grams |
|---|---|
| Concentrated Lycasine syrup # | 1265 |
| Alginate microcapsules | 1229 |
| Water | 185 |
| Gelatine 240 Bloom | 112 |
| Citric acid | 16 |
| Lemon flavour | 1.2 |
| Acesulfame | 0.8 |

| | |
|---|---|
| # Obtained by boiling down 1360 grams of Lycasine^{™} to a Brix value of 86%. Lycasine^{™} is a clear colourless odourless syrup consisting of a mixture of sorbitol, maltitol and high-molecular weight sugar alcohol | |

The composite edible product was prepared by adding water, gelatine, citric acid, flavour and acesulfame to the concentrated syrup (T=60°C), followed by thorough mixing Subsequently, the alginate microcapsules were added and gently dispersed throughout the blend. Next, the blend was poured into small moulds (2-3 ml) that had previously been coated with oil to facilitate removal of the composite product after gelation. The blend was allowed to solidify within the moulds after which the solid pieces were removed therefrom.

Despite the high fat content, the solid pieces did not produce a fatty mouthfeel when chewed. As a matter of fact, the texture of the pieces was found to be quite special as the capsules contained therein produced a clearly perceivable 'crunchy' effect when destroyed during chewing. In addition, the release of the liquid content of these capsules during chewing yielded a pleasant juicy mouthfeel.

### Example 2

Another composite product was prepared using the same alginate microcapsules and concentrated syrup as in Example 1. The composition of the composite edible product was as follows:

| | Wt.% |
|---|---|
| Alginate microcapsules | 43.3 |
| Concentrated Lycasine syrup | 39.9 |
| Gelatine/isoflavone premix ^{$} | 12.6 |
| Vitamin C | 3.3 |
| Mandarin flavour | 0.5 |
| Citric acid | 0.4 |
| Acesulfame | 0.03 |

| | |
|---|---|
| $ Mixture of water (60.3 wt.%), gelatine (31.6 wt.%) and N | |

The edible composite product was prepared in the same way as the composite product in Example 1, i.e. the alginate microcapsules were added to the syrup after the other ingredients had been admixed.

The eating properties of the solidified pieces so obtained were very similar to those described in Example 1.

## Claims

1. A composite edible product comprising a plurality of discrete filled capsules embedded in a biopolymer matrix, wherein:
• the filled capsules comprise a shell holding 0.4-50 µl of a liquid or liquefiable core,
• the shell contains at least 5 wt.% of gelling biopolymer and has a thickness in the range of 10-200 µm;
• the liquid or liquefiable core contains at least 50 wt.% of glyceride oil; and
• the composition of the biopolymer matrix is different from the composition of the shell of the filled capsules, wherein the liquid or liquefiable core represents at least 10 vol.%, preferably at least 20 vol.% of the filled capsules.

2. Composite edible product according to claim 1, wherein the liquid or liquefiable core represents at least 25 vol.%, preferably 30-70 vol.% of the composite edible product.

3. Composite edible product according to claim 1 or 2, wherein the liquid or liquefiable core represents at least 30 vol.%, preferably 40-95 vol.% of the filled capsules.

4. Composite edible product according to any one of the preceding claims, wherein the liquid or liquefiable core contains at least 3 wt.% of ω-3 polyunsaturated fatty acids.

5. Composite edible product according to any one of the preceding claims, wherein the liquid or liquefiable core has a melting point below 40 °C.

6. Composite edible product according to any one of the preceding claims, wherein the filled capsule comprises a liquid core.

7. Composite edible product according to any one of the preceding claims, wherein the water content of the shell of the filled capsules is less than 20 wt.%.

8. Composite edible product according to any one of the preceding claims, wherein the shell of the filled capsules contains at least 50 wt.% of one or more optionally cross-linked gelling biopolymers selected from the group consisting of gelatine, alginate, starch, modified starch, pectin, carrageenan, agar, xanthan gum, locust bean gum and combinations thereof.

9. Composite edible product according to any one of the preceding claims, wherein the biopolymer matrix contains at least 1% of one or more gelling biopolymers selected from the group consisting of gelatine, alginate, starch, modified starch, pectin, carrageenan, agar, xanthan gum, locust bean gum and combinations thereof.

10. Composite edible product according to any one of the preceding claims, wherein the product is a nutritional serving unit having a weight in the range of 2-20 g.

11. Composite edible product according to claim 10, wherein the shell of the filled capsules and the biopolymer matrix together contain at least 300 mg of one or more nutritional components selected from the group consisting of minerals, vitamins and flavonoids.

12. Composite edible product according to claim 10 or 11, wherein the shell of the filled capsules and the biopolymer matrix together contain at least 30, preferably at least 100 mg of vitamin C.

13. Composite edible product according to any one of claims 10-12, wherein the liquid or liquefiable core contains at least 100 mg of ω-3 polyunsaturated fatty acids.

14. Composite edible product according to any one of claims 10-13, wherein the biopolymer matrix contains at least 10 mg of isoflavones.

15. Composite edible product according to any one of claims 10-14, wherein the liquid or liquefiable core contains at least 1 mg, preferably at least 2 mg of lycopene.

## Patentansprüche

1. Zusammengesetztes essbares Produkt, das eine Vielzahl von diskreten gefüllten Kapseln eingebettet in eine Biopolymermatrix umfasst, wobei:
• die gefüllten Kapseln eine Hülle umfassen, die 0,4 bis 50 µl eines flüssigen oder verflüssigbaren Kerns hält,
• die Hülle wenigstens 5 Gewichts-% eines gelierenden Biopolymers enthält und eine Dicke im Bereich von 10 bis 200 µm hat;
• der flüssige oder verflüssigbare Kern wenigstens 50 Gewichts-% Glyceridöl enthält und
• die Zusammensetzung der Biopolymermatrix sich von der Zusammensetzung der Hülle der gefüllten Kapseln unterscheidet, wobei der flüssige oder verflüssigbare Kern wenigstens 10 Volumen-%, vorzugsweise wenigstens 20 Volumen-%, der gefüllten Kapseln ausmacht.

2. Zusammengesetztes essbares Produkt gemäß Anspruch 1, wobei der flüssige oder verflüssigbare Kern wenigstens 25 Volumen-%, vorzugsweise 30 bis 70 Volumen-%, des zusammengesetzten essbaren Produkts ausmacht.

3. Zusammengesetztes essbares Produkt gemäß Anspruch 1 oder 2, wobei der flüssige oder verflüssigbare Kern wenigstens 30 Volumen-%, vorzugsweise 40 bis 95 Volumen-%, der gefüllten Kapseln ausmacht.

4. Zusammengesetztes essbares Produkt gemäß einem der vorangehenden Ansprüche, wobei der flüssige oder verflüssigbare Kern wenigstens 3 Gewichts-% mehrfach ungesättigte ω-3-Fettsäuren enthält.

5. Zusammengesetztes essbares Produkt gemäß einem der vorangehenden Ansprüche, wobei der flüssige oder verflüssigbare Kern einen Schmelzpunkt von unter 40 °C hat.

6. Zusammengesetztes essbares Produkt gemäß einem der vorangehenden Ansprüche, wobei die gefüllte Kapsel einen flüssigen Kern umfasst.

7. Zusammengesetztes essbares Produkt gemäß einem der vorangehenden Ansprüche, wobei der Wassergehalt der Hülle der gefüllten Kapseln weniger als 20 Gewichts-% ist.

8. Zusammengesetztes essbares Produkt gemäß einem der vorangehenden Ansprüche, wobei die Hülle der gefüllten Kapseln wenigstens 50 Gewichts-% eines oder mehrerer gegebenenfalls vernetzter gelierender Biopolymere, ausgewählt aus der Gruppe, bestehend aus Gelatine, Alginat, Stärke, modifizierter Stärke, Pektin, Carrageenan, Agar, Xanthangummi, Johannisbrotkerngummi und Kombinationen davon, enthält.

9. Zusammengesetztes essbares Produkt gemäß einem der vorangehenden Ansprüche, wobei die Biopolymermatrix wenigstens 1 % eines gelierenden Biopolymers oder mehrerer gelierender Biopolymere, ausgewählt aus der Gruppe, bestehend aus Gelatine, Alginat, Stärke, modifizierter Stärke, Pektin, Carrageenan, Agar, Xanthangummi, Johannisbrotkerngummi und Kombinationen davon, enthält.

10. Zusammengesetztes essbares Produkt gemäß einem der vorangehenden Ansprüche, wobei das Produkt eine nutritionale Serviereinheit ist, die ein Gewicht im Bereich von 2-20 g hat.

11. Zusammengesetztes essbares Produkt gemäß Anspruch 10, wobei die Hülle der gefüllten Kapseln und die Biopolymermatrix zusammen wenigstens 300 mg einer nutritionalen Komponente oder mehrerer nutritionaler Komponenten, ausgewählt aus der Gruppe, bestehend aus Mineralstoffen, Vitaminen und Flavonoiden, enthalten.

12. Zusammengesetztes essbares Produkt gemäß Anspruch 10 oder 11, wobei die Hülle der gefüllten Kapseln und die Biopolymermatrix zusammen wenigstens 30, vorzugsweise wenigstens 100 mg, Vitamin C enthalten.

13. Zusammengesetztes essbares Produkt gemäß einem der Ansprüche 10 bis 12, wobei der flüssige oder verflüssigbare Kern wenigstens 100 mg mehrfach ungesättigter ω-3-Fettsäuren enthält.

14. Zusammengesetztes essbares Produkt gemäß einem der Ansprüche 10 bis 13, wobei die Biopolymermatrix wenigstens 10 mg Isoflavone enthält.

15. Zusammengesetztes essbares Produkt gemäß einem der Ansprüche 10 bis 14, wobei der flüssige oder verflüssigbare Kern wenigstens 1 mg, vorzugsweise wenigstens 2 mg, Lycopin enthält.

## Revendications

1. Produit comestible composite comprenant une pluralité de capsules individuelles remplies, incorporé dans une matrice de biopolymère, dans lequel :
➢ les capsules remplies comprennent une coque retenant 0,4 à 50 µl d'un noyau liquide ou liquéfiable,
➢ la coque contient au moins 5 % en poids d'un biopolymère de gélification et a une épaisseur de l'ordre de 10 à 200 µm ;
➢ le noyau liquide ou liquéfiable contient au moins 50 % en poids d'huile de glycéride ; et
➢ la composition de la matrice de biopolymère est différente de la composition de la coque des capsules remplies, le noyau liquide ou liquéfiable représentant au moins 10 % en volume, de préférence au moins 20 % en volume des capsules remplies.

2. Produit comestible composite selon la revendication 1, dans lequel le noyau liquide ou liquéfiable représente au moins 25 % en volume, de préférence 30 à 70 % en volume du produit comestible composite.

3. Produit comestible composite selon la revendication 1 ou 2, dans lequel le noyau liquide ou liquéfiable représente au moins 30 % en volume, de préférence 40 à 95 % en volume des capsules remplies

4. Produit comestible composite selon l'une quelconque des revendications précédentes, dans lequel le noyau liquide ou liquéfiable contient au moins 3 % en poids d'acides gras ω-3 poly-insaturés.

5. Produit comestible composite selon l'une quelconque des revendications précédentes, dans lequel le noyau liquide ou liquéfiable a un point de fusion inférieur à 40 °C.

6. Produit comestible composite selon l'une quelconque des revendications précédentes, dans lequel la capsule remplie comprend un noyau liquide.

7. Produit comestible composite selon l'une quelconque des revendications précédentes, dans lequel la teneur en eau de la coque des capsules remplies est inférieure à 20 % en poids.

8. Produit comestible composite selon l'une quelconque des revendications précédentes, dans lequel la coque des capsules remplies contient au moins 50 % en poids d'un ou plusieurs biopolymères de gélification éventuellement réticulés choisis dans le groupe comprenant la gélatine, l'alginate, l'amidon, l'amidon modifié, la pectine, le carraghénane, l'agar agar, la gomme xanthane, la gomme de caroube et leurs combinaisons.

9. Produit comestible composite selon l'une quelconque des revendications précédentes, dans lequel la matrice biopolymère contient au moins 1 % d'un ou plusieurs biopolymères de gélification choisis dans le groupe comprenant la gélatine, l'alginate, l'amidon, l'amidon modifié, la pectine, le carraghénane, l'agar agar, la gomme xanthane, la gomme de caroube et leurs combinaisons.

10. Produit comestible composite selon l'une quelconque des revendications précédentes, dans lequel le produit est une part nutritionnelle ayant un poids de l'ordre de 2 à 20 g.

11. Produit comestible composite selon la revendication 10, dans lequel la coque des capsules remplies et la matrice biopolymère contiennent conjointement au moins 300 mg d'un ou plusieurs composants nutritionnels choisis dans le groupe comprenant des minéraux, des vitamines et des flavonoïdes.

12. Produit comestible composite selon la revendication 10 ou 11, dans lequel la coque des capsules remplies et la matrice biopolymère contiennent conjointement au moins 30, de préférence au moins 100 mg de vitamine C.

13. Produit comestible composite selon l'une quelconque des revendications 10 à 12, dans lequel le noyau liquide ou liquéfiable contient au moins 100 mg d'acides gras ω-3 poly-insaturés.

14. Produit comestible composite selon l'une quelconque des revendications 10 à 13, dans lequel la matrice biopolymère contient au moins 10 mg d'isoflavones.

15. Produit comestible composite selon l'une quelconque des revendications 10 à 14, dans lequel le noyau liquide ou liquéfiable contient au moins 1 mg, de préférence au moins 2 mg de lycopène.
